# EUROPÄISCHE PATENTSCHRIFT

(11) **EP 1 878 760 B1**
(45) Veröffentlichungstag und Bekanntmachung des Hinweises auf die Patenterteilung: **03.03.2010**
(21) Anmeldenummer: 07012349.2
(22) Anmeldetag: 25.06.2007
(51) Int. Cl.: C08G 77/00, C08G 77/442, C08G 77/50, C08G 77/58, C09D 183/14, C01B 33/155, C01B 33/16, C08F 30/08

(54) **Hybride Polymermaterialien durch Copolymerisation**
Hybrid polymer materials through copolymerisation
Matériaux hybrides en polymère par copolymérisation

(30) Priorität: 11.07.2006 DE 102006032077
(43) Veröffentlichungstag der Anmeldung: 16.01.2008
(73) Patentinhaber: Fraunhofer-Gesellschaft zur Förderung der angewandten Forschung e.V., 80686 München (DE)
(72) Erfinder: Rose, Klaus, Dr., 97318 Kitzingen (DE)
(74) Vertreter: Pfenning, Meinig & Partner GbR

(56) Entgegenhaltungen:
- EP-A- 0 451 709
- EP-A- 0 853 959
- EP-A- 1 022 012
- WO-A-98/28307
- WO-A-2005/040249
- DE-A- 19 630 100
- DE-C1- 4 416 857
- US-A1- 2002 065 362
- US-A1- 2005 192 366
- US-A1- 2006 084 707
- YEN WEI ET AL: "THERMAL STABILITY AND HARDNESS OF NEW POLYACRYLATE-SIO2 HYBRID SOL-GEL MATERIALS" MATERIALS LETTERS, NORTH HOLLAND PUBLISHING COMPANY. AMSTERDAM, NL, Bd. 13, Nr. 4 / 5, 1. April 1992 (1992-04-01), Seiten 261-266, XP000360159 ISSN: 0167-577X
- G.-W. JANG ET AL.: "Composites of Polyaniline and Polyacrylate-Silica Hybrid Sol-Gel Materials" J. ELECTROCHEM. SOC., Bd. 143, Nr. 8, 1996, Seiten 2591-2596, XP002472068
- VARMA INDRA K ET AL: "COPOLYMERIZATION OF gamma -METHACRYLOXY PROPYL TRIMETHOXY SILANE AND METHYL METHACRYLATE" JOURNAL OF APPLIED POLYMER SCIENCE, JOHN WILEY AND SONS INC. NEW YORK, US, Bd. 33, Nr. 4, März 1987 (1987-03), Seiten 1377-1388, XP002390275 ISSN: 0021-8995
- D. DONESCU ET AL.: "Hybrid materials obtained in microemulsion from methyl methacrylate, methacryloxypropyltrimethoxysilane, tetraethoxysilane" EUROPEAN POLYMER JOURNAL, Bd. 35, 1999, Seiten 1679-1686, XP002472069

## Beschreibung

Die Erfindung betrifft ein Verfahren zur Herstellung von Hybridpolymeren, derartig hergestellte Hybridpolymere sowie Beschichtungen und Formkörper aus diesen Hybridpolymeren.

Der technologische Fortschritt und die damit verbundene Nachfrage nach neuen Materialien haben zu steigendem Interesse an neuen anorganisch-organischen Hybridpolymeren geführt, mit der Zielsetzung, die Eigenschaften von bekannten anorganischen Materialien (Glas, Keramik) mit denen von organischen Polymeren zu kombinieren. Dies führte zunächst zu Entwicklung von Verbundwerkstoffen, bei denen die unterschiedlichen Komponenten separat hergestellt und dann makroskopisch gemischt werden. Die Einarbeitung von anorganischen Fasern (Glasfasern) oder Pulvern bzw. Partikeln in organische Polymere zu deren Verstärkung führte somit erstmals zu neuen Hybridmaterialien. Dies kann über einen einfachen Mischvorgang in einem Lösemittel oder über die Schmelze des Polymers geschehen. Der umgekehrte Vorgang, die Zugabe von organischen Polymeren zu anorganischen Werkstoffe scheitert an den hohen Verarbeitungstemperaturen von anorganischen Materialien (mehrere hundert Grad), die zur Zersetzung der organischen Werkstoffe führt.

Das Aufbringen von Beschichtungen ist eine einfache Methode, um Eigenschaften eines Werkstückes oder Bauteiles gezielt zu verbessern, ohne das oft preiswerte Basismaterial völlig zu verändern. Auf diese Weise kann das entsprechende Substrat in vielerlei Hinsicht veredelt und somit auch neuen Anwendungen zugeführt werden. Im einfachsten Fall besteht die Veredelung im Aufbringen dekorativer Schichten. Für spezielle Anwendungen sollen vor allem auch funktionelle, z. B. mechanische, chemische, elektrische und optische Eigenschaften durch Beschichtungen gezielt verbessert werden. Die zunehmend komplexeren Anforderungen, die an die Beschichtungsmaterialien gestellt werden, führten auch hierbei zu verstärktem Interesse an anorganisch-organischen Hybridmaterialien, die durch Synergieeffekte im Idealfall die Eigenschaften anorganischer Werkstoffe und organischer Polymere optimal in sich vereinigen. Als sehr aussichtsreiche und universelle Methode zur Herstellung solcher hybrider Beschichtungssysteme hat sich der Sol-Gel-Prozess etabliert (G. Schottner, "Hybrid-Sol-gel-Derived Polymers: "Applications of Multifunctional Materials", Chem. Mater. 13 (2001) 3422-3435).

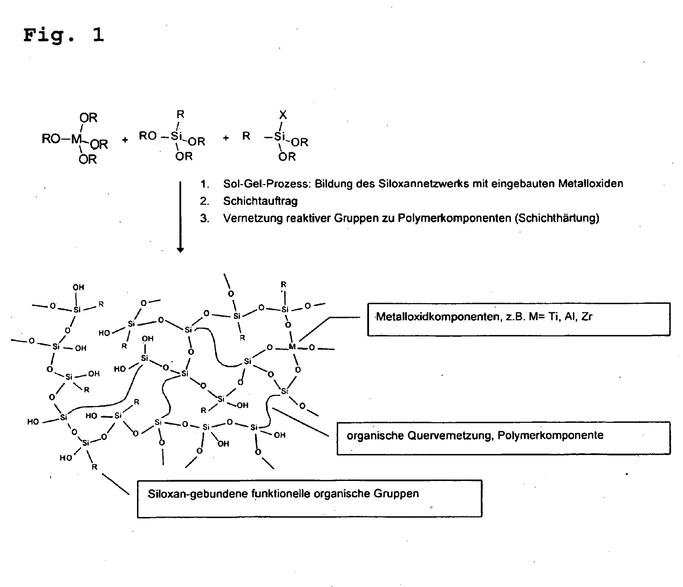

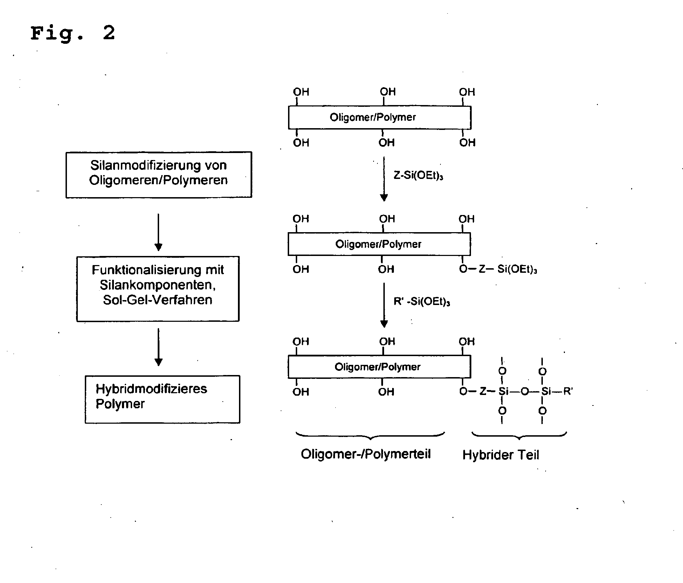

Die Transparenz ist eine spezielle Anforderung an nahezu alle Anwendungen von Schichten. Die Einarbeitung von anorganischen Pulvern, Partikeln oder Fasern in organische Beschichtungssysteme und Lacke reduziert diese Eigenschaft beträchtlich, außer man begrenzt die Größe der dispergierten Zusatzstoffe unterhalb der Wellenlänge des sichtbaren Lichtes (< 100 nm). Die beste Möglichkeit ist, wenn anorganische und organische Komponenten auf molekularem Niveau miteinander verbunden werden. Dies erhält die Transparenz der Schicht und bewirkt optimale synergistische und dauerhafte Wirkung der Komponenten. Es sind zwei prinzipielle Verfahrensweisen zur Herstellung von hybriden Materialien mit Polymerkomponenten bekannt:
1) Bei der Herstellung von hybriden Schichten über den Sol-Gel-Prozess werden Alkoxyverbindungen des Siliciums vom allgemeinen Typ R'Si(OR)₃ oder R'₂Si(OR)₂ die unterschiedliche Reste R' enthalten können, mit Wasser umgesetzt. Dieser Hydrolyseprozess induziert eine Kondensationsreaktion, wodurch ein anorganisches, Siloxangrundgerüst aufgebaut wird, das die organische Gruppen unverändert enthält. Hinzufügen von peralkoxylierten Verbindungen des Siliciums, Titans, Zirkons oder Aluminiums ohne organische Substituenten, z.B. Si(OEt)₄, Ti(OEt)₄, Zr(OPr)₄, Al(O^{s}Bu)₃, modifiziert den anorganischen Anteil des Materials durch Ausbildung der entsprechenden Metalloxidstruktur. Die sich bietenden vielfältigen Kombinationsmöglichkeiten von organisch substituierten Silanausgangsverbindungen mit rein organischen und/oder anorganischen Precursoren in homogener Lösung ermöglicht die Synthese von anorganisch-organischen Hybridmaterialien mit gezielt einstellbaren Eigenschaften, die sich zwischen denen organischer Polymere und keramischer/glasartiger Materialien einstellen lassen.
   Das über die beschriebene Reaktion mit Wasser erhaltene Sol enthält neben Wasser und hydrolytisch gebildetem Alkohol die präpolymere anorganische Grundstruktur und kann mittels konventioneller Beschichtungstechnik, wie sie für Nasslacke üblicherweise eingesetzt wird, auf das Substrat aufgebracht und getrocknet bzw. gehärtet werden. Besonders interessante Möglichkeiten ergeben sich wenn der organische Rest eine Gruppe X darstellt, die zu einer Polymerisationsreaktion befähigt ist. Diese reaktiven Gruppen können über bekannte Reaktionsabfolgen miteinander vernetzt werden, was zur Ausbildung eines zweiten, jetzt organischen, Netzwerkes führt und den Charakter des anorganisch-organischen Hybridwerkstoffes mitbestimmt. Diese Polymerisationsreaktionen dienen vor allem auch zur Härtung des Materials nach dem Schichtauftrag. Die Schichthärtung kann thermisch, durch IR, UV, Elektronenstrahlen oder im Plasma erfolgen. Das gesamte Verfahren ist schematisch in Fig. 1 aufgezeigt.
   Folgende Nachteile zeigt dieses Verfahren:
   - Die organischen Polymerkomponenten sind nicht durchgehend aufgebaut, sondern durch anorganische Komponenten unterbrochen, d.h. der Polymeranteil mit seinen intrinsischen Eigenschaften kommt nicht ausreichend zur Geltung
   - Der alkoholische Anteil im wässrig alkoholischen Beschichtungssol kann nicht vollständig durch Wasser ersetzt werden, um zu wässrigen Dispersionen/Emulsionen zu gelangen. Dies führt zu Agglomeration, Ausfällung und Vergelung. Vielmehr kann das Sol nur unter großem Aufwand in eine wässrige Suspension/Emulsion überführt werden. Dieses aufwendige Verfahren ist in DE 196 53 480 B4 und in EP 0 849 332 A1 beschrieben.
2) Eine Alternativmethode zur Herstellung von hybriden Materialien/Schichten mit Polymeranteil geht von vorgefertigten organischen Oligomeren oder Polymeren aus. Über funktionelle Gruppen, z.B. OH-Gruppen, am Polymer wird zunächst ein funktionelles Alkoxysilan angebunden und es resultiert ein silanmodifiziertes organisches Oligomer/Polymer. Durch weitere Umsetzung mit funktionellen Organoalkoxysilanen im Sol-Gel-Prozess wird ein hybridmodifiziertes Oligomer/Polymer enthalten. Die Weiterverarbeitung des silylierten Oligomers/Polymers mit funktionellen Silanen des Typs R'Si(OR)₃ oder mit organisch reaktiven Silanen des Typs XSi(OR)₃ im Sol-Gel-Prozess erfolgt nach bekannten Methoden und Verfahren. Das Verfahren ist schematisch in Fig. 2 dargestellt.

Als vorgefertigte Oligomere/Polymere kommen z.B. Vinylbutyral/Vinylalkohol/Vinylacetat-Copolymere, Styrol/Allylakohol-Copolymere oder auch Polyhydroxyacrylate/Acrylat-Copolymere in Frage. Durch Verwendung von OH-haltigen organischen Oligomeren/Polymeren können wasserlösliche, wasserdispergierbare oder -emulgierbare hybride Materialien/Schichten erhalten werden, die einen deutlich höheren Polymeranteil besitzen. Die intrinsischen Eigenschaften des organischen Polymers kommen jetzt besser zur Geltung. Beispiele dazu sind in DE 100 44 216, in EP 1 186 640 und in EP 1 582 270 beschrieben.

Das Verfahren zeigt den Nachteil, dass die vorgefertigten organischen Polymerketten aufgrund eingeschränkter Löslichkeit oft eine Umsetzung und Weiterverarbeitung unter Sol-Gel-Bedingungen in den dafür notwendigen alkoholischen Medien erschweren oder verhindern. Es kommt zu Ausfällung und Vergelung.

In der US 2005/0192366 A1 ist eine organisch-modifizierte Silica-Aerogel-Zusammensetzung beschrieben, die ein Oligomer aus der Acrylatfamilie enthält, das innerhalb des Aerogel-Silikatnetzwerkes gebunden ist. Weiterhin wird hier ein Verfahren zur Herstellung von Aerogelen beschrieben.

Die US 2006/0084707 A1 beinhaltet ein Verfahren zur Herstellung von Geltropfen.

Aus "Thermal stability and hardness of new polyacrylate-SiO₂ hybrid sol-gel materials" von Y. Wei et al. aus "Material Letters" 13 (1992) April, No. 4/5, Amsterdam, NL, geht die Herstellung von Hybridmaterialien, die mittels Sol-Gel-Reaktion aus Poly[methyl methacrylat]co-3-(trimethoxysilyl)propylmethacrylat] (PM MSMA) oder Poly[3-(trimethoxysilyl)propyl methacrylat] (PMS-MA) mit Tetraethylorthosilikat (TEOS) hergestellt werden, hervor.

In der Veröffentlichung von G.-W. Jang et al.: "Composites of polyanilin and polyacrylate-silica hybrid sol-gel materials" aus J. Electrochem. Soc., Vol. 143, No. 8, August 1996, S. 2591-2596, ist die Herstellung von Polyacrylat-Silika-Hybridsol-Gel-Netzwerken dargestellt, wobei Poly[methyl methacrylat]co-3-(trimethoxysilyl)propyl methacrylat] und Tetraethylorthosilikat eingesetzt werden.

Im "Journal of Applied Polymer Science", Vol. 33, 1377-1388 (1987) wird von Indra K, Varma et al in "Copolymerisation of γ-Methacryloxy Propyl Trimethoxy Silane and Methyl Methacrylate" eine Copolymerisation aus γ-Methacryloxypropyltrimethoxysilan und Allylmethacrylat unter Verwendung von Trichlorsilan beschrieben.

Die EP 0 853 959 B1 umfasst eine Zusammensetzung zur Behandlung von Asbest, die eine Organosiloxanverbindung, mindestens eine Organosiliciumverbindung sowie mindestens eine Verbindung, die aus einem speziellen Monomer, Polymer oder Copolymer ausgewählt ist, sowie mindestens einen Initiator für freie Radikale.

Die EP 1 022 012 A2 beschreibt Dentalmaterialien auf der Basis von Polysiloxanen.

In "Hybrid materials obtained in microemulsion from methyl methacrylate, methacryloxyproyltrimethoxysilane, tetraethoxysilane" von D. Donescu et al. aus "Eu - ropean Polymer Journal 35 (1999), S. 1679-1686, geht eine Polymerisation von Methylmethacrylat in Gegenwart eines zuvor hergestellten anorganischen Netzwerkes hervor. Weiterhin kann das anorganische Netzwerk durch eine Sol-Gel-Reaktion von metallischen Alkoxiden in der Gegenwart von Polymethylmethacrylat erfolgen.

In der EP 0 451 709 A2 werden Silane, Verfahren zu ihrer Herstellung und ihrer Verwendung zur Herstellung von Polymerisaten und Polykondensaten beschrieben.

Die US 2002/0065362 A1 beschreibt eine Wasser-basierte Harzemulsion und eine Wasser-basierte Beschichtung.

In der Offenlegungsschrift DE 196 30 100 A1 wird ein Verfahren zur Herstellung eines für optische Zwecke geeigneten Formkörpers beschrieben.

Die WO 98/28307 betrifft radikalisch polymerisierbare Silanmonomere und -oligomere sowie ein Verfahren zu deren Herstellung.

Aufgabe der vorliegenden Erfindung ist daher die Bereitstellung von neuen hybriden Materialien und Schichtsystemen mit ausgeprägtem Polymeranteil und ein Verfahren zur Herstellung dieser Materialien.

Diese Aufgabe wird durch das Verfahren zur Herstellung von Hybridpolymeren, mit den Merkmalen des Anspruchs 1, das Hybridpolymer mit den Merkmalen des Anspruchs 14 und die Beschichtung oder Formkörper mit den Merkmalen des Anspruchs 15 gelöst. Die weiteren abhängigen Ansprüche zeigen vorteilhafte Weiterbildungen auf.

Erfindungsgemäß wird ein Verfahren zur Herstellung von Hybridpolymeren aus mindestens einem (Meth)acrylat-Monomer und mindestens einem (Meth)acrylatalkoxysilan-Monomer bereitgestellt, das auf der Kombination einer radikalischen Copolymerisation der Acrylatfunktionalitäten und einer hydrolytischen Kondensation der Silanfunktionalitäten beruht. Hierdurch kommt es sowohl zur Ausbildung eines organischen wie eines anorganischen Netzwerkes, weswegen man in diesem Zusammenhang auch von Hybridpolymeren spricht.

Vorzugsweise ist das mindestens eine (Meth)acrylat-Monomer ausgewählt aus der Gruppe bestehend aus n-Alkyl(meth)acrylaten, Hydroxy-n-alkyl(meth)acrylaten, 2-Ethylhexyl-(meth)acrylat, Isodecyl(meth)acrylat, Cyclohexyl(meth)acrylat, Isobornyl(meth)acrylat, Benzyl(meth)acrylat, 2-Dimethylaminoethyl-(meth)acrylat, 3-Dimethylaminopropylmethacryl-amid, 2-Trimethylammoniumethylmethacrylat-chlorid, 3-Trimethylammoniumethylmethacrylatchlorid, 2-tert-Butylaminoethyl(meth)acrylat, Methoxypolyethylenglykolmethacrylat und Mischungen hiervon.

Das mindestens eine (Meth)acrylat-alkoxysilan-Monomer ist erfindungsgemäß ausgewählt aus der Gruppe von chemischen Strukturen, die in Anspruch 1 aufgeführt sind.

Vorzugsweise kann zusätzlich mindestens ein (Meth)-acrylat-Alkoxysilan-Monomer ausgewählt aus den in Anspruch 2 genannten chemischen Strukturen sein.

Eine weitere bevorzugte Verfahrensvariante sieht vor, dass bei der hydrolytischen Kondensation funktionelle Alkoxysilane der allgemeinen Formel R'ₘSi(OR)₄₋ₘ mit R = unabhängig voneinander C₁-C₁₀-Alkyl, Acyl, Alkylcarbonyl oder Alkoxycarbonyl und R' = unabhängig voneinander Alkyl, Aryl, Arylalkyl oder Alkylaryl darstellen, wobei diese Reste durch O- oder S-Atome oder die Gruppe -NR" unterbrochen sein können und einen oder mehrere Substituenten aus der Gruppe der Halogene und der gegebenenfalls substiuierten Amid-, Aldehyd-, Keto-, Alkylcarbonyl-, Carboxy-, Cyano-, Alkoxy-, Alkoxycarbonyl-Gruppen tragen können und m den Wert 1, 2 oder 3 hat, oder reaktive Alkoxysilane der allgemeinen Formel XₘSi(OR)₄₋ₘ mit R = unabhängig voneinander C₁-C₁₀-Alkyl, Acyl, Alkylcarbonyl oder Alkoxycarbonyl und X = unabhängig voneinander Alkyl, Alkenyl, Alkinyl, Aryl, Arylalkyl, Alkylaryl, Arylalkenyl, Alkenylaryl, Arylalkinyl oder Alkinylaryl darstellen, wobei diese Reste durch O- oder S-Atome oder die Gruppe -NR" unterbrochen sein können und einen oder mehrere Sustituenten aus der Gruppe der Halogene und der gegebenenfalls substituierten Amino-, Amid-, Aldehyd-, Keto-, Alkylcarbonyl, Carboxy-, Mercapto-, Cyano-, Hydroxy-, Alkoxy-, Alkoxycarbonyl-, Sulfonsäure-, Phosphorsäure, Acryloxy-, Methyacryloxy-, Epoxy- oder Vinylgruppen tragen können und m den Wert 1, 2 oder 3 hat, zugesetzt werden. Weiterhin können Verbindungen der allgemeinen Formel MeR"y, in welcher Me ein Metall ausgewählt aus der Gruppe Al, Zr, Ti ist, wobei y im Falle von Aluminium 3 und im Falle von Ti und Zr 4 ist und die Reste R'', die gleich oder verschieden sein können, Halogen, Alkyl, Alkoxy, Acyloxy oder Hydroxy bedeuten, wobei die soeben genannten Gruppen ganz oder teilweise durch Chelatliganden ersetzt sein können und/oder einem davon abgeleiteten Oligomeren und/oder einem gegebenenfalls komplexierten Aluminiumsalz einer anorganischen oder organischen Säure eingesetzt werden.

Nur beispielhaft sollen als funktionelle Alkoxysilane die in Anspruch 5 aufgeführten chemischen Strukturen betrachtet werden.

Die radikalische Copolymerisation kann erfindungsgemäß mit allen aus dem Stand der Technik bekannten Radikalstartern durchgeführt werden. Hier sind insbesondere organische Peroxide (aliphatisch, cycloaliphatisch, aromatisch), organische Hydroperoxide, Peroxyester, Peroxycarbonate und Azoisobutyronitril zu nennen.

Hinsichtlich der Reihenfolge von Copolymerisation und Sol-Gel-Prozess sind zwei Verfahrensvarianten möglich.

Die erste Verfahrensvariante beruht auf den folgenden Schritten:
i) Radikalische Copolymerisation von mindestens einem (Meth)acrylat-Monomer mit mindestens einem (Meth)acrylat-Alkoxysilan-Monomer in einem die mindestens zwei Monomere lösenden Lösungsmittel und
ii) Hydrolytische Kondensation des Copolymers unter Erhalt des Hybridpolymers in einem Sol-Gel-Prozess.

In Schritt i) wird das Lösungsmittel vorzugsweise ausgewählt aus der Gruppe bestehend aus Estern, Ketonen, Aldehyden, aliphatischen oder aromatischen Lösungsmitteln sowie Mischungen hiervon. Die Copolymerisation kann durch erhöhte Temperaturen beschleunigt werden, wobei der bevorzugte Temperaturbereich für die Copolymerisation im Bereich von 50 bis 150 °C liegt.

Organische Monomere, z.B. Acrylate oder Methacrylate werden in einem gemeinsamen Lösemittel mit hybriden Ausgangsmonomeren, z.B. Methacrylatalkoxysilan, in einem gemeinsamen Lösemittel gelöst. Unter Zugabe eines Radikalstarters und unter Rückflussbedingungen wird z.B. ein Poly(meth)acrylat erzeugt, das noch Alkoxysilylgruppen enthält. Durch Anwendung des Sol-Gel Prozesses werden diese Gruppen in ein anorganisches Siloxangerüst überführt und es resultiert ein hybrides Material mit signifikantem Polymeranteil. Bei der Überführung des Copolymers in das Hybridmaterial kann durch Cohydrolyse mit anderen Alkoxysilanen eine hohe Funktionalität des Materials erzeugt werden, wie in (G. Schottner, "Hybrid-Sol-gel-Derived Polymers: "Applications of Multifunctional Materials", Chem. Mater. 13 (2001) 3422-3435) beschrieben.

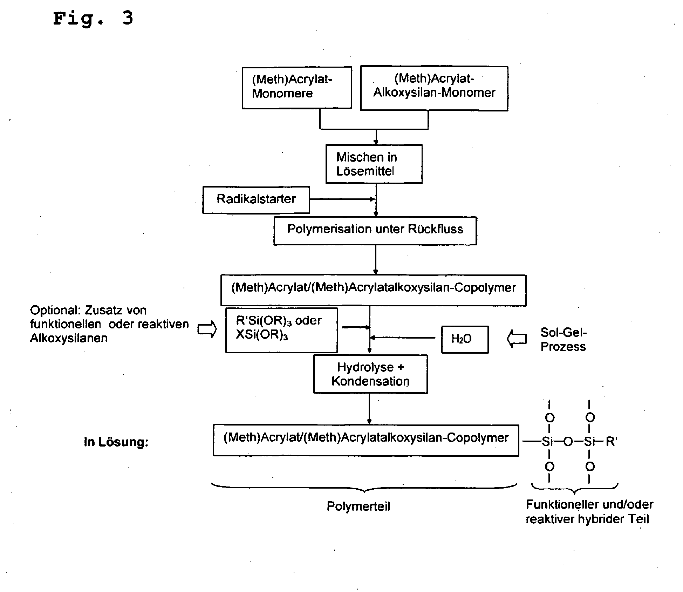

Diese erste Verfahrensvariante ist anhand eines Schemas in Fig. 3 dargestellt.

Eine zweite Verfahrensvariante sieht die folgenden Verfahrensschritte vor:
i) Hydrolytische Kondensation mindestens eines (Meth)acrylat-Alkoxysilan-Monomers und
ii) Radikalische Copolymerisation des mindestens einen hydolysierten (Meth)acrylat-Alkoxysilan-Monomers mit mindestens einem (Meth)acrylat-Monomer in einem die mindestens zwei Monomere lösenden Lösungsmittel unter Erhalt des Hybridpolymers.

Zur Herstellung von Polyacrylatdispersionen als Beschichtungslacke wird die Emulsionspolymerisation eingesetzt. Die allgemeine Vorgehensweise beinhaltet die Umsetzung einer Emulsion aus Monoacrylaten und Dispergieradditiv in Wasser mit einer Lösung aus Radikalstarter in Wasser bei ca. 85 °C. Nach Ablauf der radikalischen Acrylatpolymerisation resultiert eine wässrige Polymerdispersion, die prinzipiell als Beschichtungsmaterial oder Lack eingesetzt werden kann. Das Polymer verfilmt nach Schichtauftrag und Verdunsten bzw. Entfernen des Wassers zu einer Schicht. Organische Acrylatdispersionen mit unterschiedlicher Zusammensetzung, basierend auf eine Vielfalt möglicher monomerer Acrylate, werden als selbsttrocknende Lacke und Anstrichfarben für unterschiedlichste Anwendungen eingesetzt. Die Polymerisationsreaktion wird dabei in der Regel bis zur vollständigen Abreaktion aller freien (Meth)Acrylatgruppen fortgeführt.

Die Anwendung dieses Verfahrens mit monomeren (Meth)Acrylatalkoxysilanen zur Herstellung von hybriden Polyacrylatdispersionen ist nicht möglich. Grund dafür ist, dass die wasser- und hydrolyseempfindliche Alkoxysilygruppe gleichzeitig mit der organischen Copolymerisation in Gegenwart von Wasser eine Hydrolyse- und Kondensationsreaktion eingeht, wie sie beim Sol-Gel-Prozess vorher beschrieben wurde. Dies führt zur Ausbildung des Siloxannetzwerkes (siehe Bild 1) und zur Vergelung des gesamten Reaktionsgemisches. Die Lösung dieses Problems besteht nun darin, die monomere (Meth)Acrylatalkoxysilan-Komponente vor der Emulsionspolymerisation nach Standardverfahren des Sol-Gel-Prozesses zu hydrolysieren. Dabei wird das Siloxannetzwerk aufgebaut, das noch freie, polymerisationsfähige (Meth)Acrylatgruppen enthält. Bei diesem Vorhydrolysat muss teilweise jetzt noch der durch Hydrolysereaktion gebildete Alkohol (in der Regel Methanol oder Ethanol) durch Destillation entfernt werden, da sonst keine stabile Dispersion hergestellt werden kann. Die Gegenwart von Alkohol führt zu Ausfällung und Vergelung während der Emulsionspolymerisation.

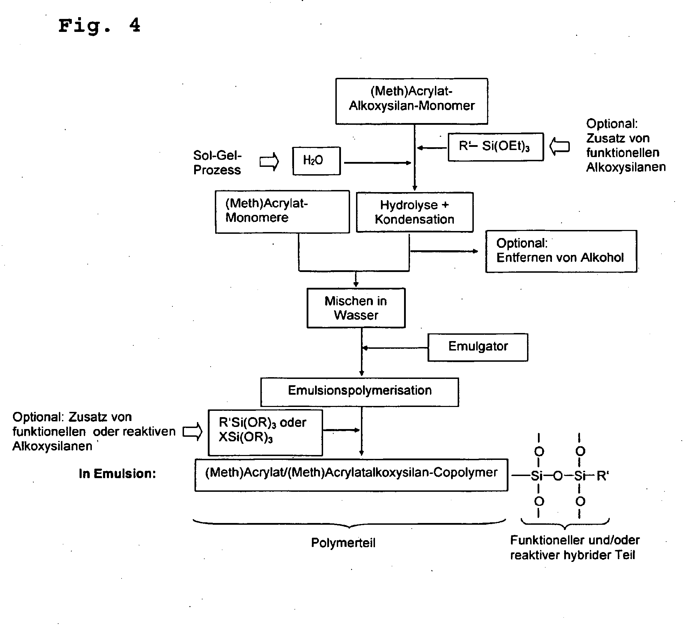

Gleichzeitig ist es möglich, im Vorhydrolysat eine Mischung aus (Meth)Acrylatalkoxysilan und anderen funktionellen Alkoxysilanen R'ₘSi(OR)₄₋ₘ herzustellen, die für die funktionellen Eigenschaften des über die Dispersion hergestellten Lackes verantwortlich sind. Somit kann eine Kombination aus Acrylatdispersionslack und funktionellen hybriden Schichtsystemen in einem Material erzielt werden. Die Möglichkeit der Cohydrolyse der erhaltenen hybriden Polymerdispersion mit funktionellen Alkoxysilanen R'ₘSi(OR)₄₋ₘ oder reaktiven Alkoxysilanen XₘSi(OEt)₄₋ₘ ist aber auch nach Ablauf der Emulsionspolymerisation noch gegeben. Diese zweite erfindungsgemäße Variante ist in Fig. 4 dargestellt.

Erfindungsgemäß wird ebenso ein nach dem oben bezeichneten Verfahren herstellbares Hybridpolymer bereitgestellt sowie eine Beschichtung oder ein Formkörper enthaltend oder bestehend aus diesem Hybridpolymer.

Die durch Polymerisation in Lösemittel oder in wässriger Emulsion erhaltenen Polyacrylate können als Beschichtungssysteme eingesetzt werden. Nach Schichtauftrag und Verdunsten des Lösemittels oder des Wassers verbleibt ein trockener Film bzw. eine trockene Schicht. Dieser Vorgang kann durch Einfluss von Wärme beschleunigt und vervollständigt werden.

Unter Verwendung von reaktiven Alkoxysilanverbindungen, z.B. XₘSi(OR)₄₋ₘ, d. h. acrylat- und methacrylatbasierende Alkoxysilane oder epoxybasierender Alkoxysilane als funktionelles Silan und Verarbeitung mit (Meth)Acrylat/(Meth)Acrylatalkoxysilan-Copolymeren unter Sol-Gel-Bedingungen können wieder reaktive, polymerisationsfähige Gruppen eingebaut werden, die bei entsprechender UV- oder Temperaturbehandlung polymerisieren und somit vernetzen und zur Schichthärtung verwendet werden können. Durch diese zusätzliche Vernetzung kann eine deutlich bessere mechanische Stabilität und somit Kratzfestigkeit und Schutzwirkung der Schicht erzielt werden.

Insgesamt kann der Polymercharakter aufgrund deutlichen Polymeranteils mit den Möglichkeiten der bisher bekannten hybriden Schichtsysteme (Funktionalisierbarkeit, hohe anorganische und organische Vernetzung) kombiniert werden. Die Nachteile rein organischer Acrylatpolymere (geringe Funktionalität, geringe Kratzfestigkeit) können somit vermieden werden.

Durch wässrige Emulsionscopolymerisation hydrolysierter hybrider Komponenten mit (Meth)Acrylatmonomeren wird das Gesamtpolymer schon in wässriger Phase hergestellt und unter Gegenwart geeigneter kommerzieller Emulgatoren/Stabilisatoren stabilisiert. Ein aufwendiger Prozess des Austausches von Lösemittel gegen Wasser ist nicht notwendig. Somit können wasserbasierende hybride Emulsionen/Dispersionen zur Verwendung als Wasserlack hergestellt werden.

Anhand der nachfolgenden Figuren und Beispiele soll das erfindungsgemäße Verfahren näher beschrieben werden, ohne dieses auf die hier gezeigten speziellen Ausführungsvarianten beschränken zu wollen.

Fig. 1 zeigt anhand eines Schemas eine erste aus dem Stand der Technik bekannte Variante zur Herstellung von Hybridpolymeren.

Fig. 2 zeigt anhand eines Schemas eine zweite aus dem Stand der Technik bekannte Variante zur Herstellung von Hybridpolymeren.

Fig. 3 zeigt eine erste erfindungsgemäße Variante zur Herstellung von Hybridpolymeren anhand eines Schemas.

Fig. 4 zeigt eine zweite erfindungsgemäße Variante zur Herstellung von Hybridpolymeren anhand eines Schemas.

### Beispiel 1 und 2 (nicht erfindungsgemäß):

### Allgemeines Verfahren zur Copolymerisation in Lösung ohne Hydrolyse des Methacrylatalkoxysilans

Tabelle 1 zeigt die Ausgangssubstanzen und die jeweiligen Mengen.

**Tabelle 1**

| | Beispiel 1 | | Beispiel 2 | |
|---|---|---|---|---|
| Methylmethacrylat | --- | --- | 1 mol | 110,12 g |
| Butylacrylat | 1, 0 | 142,2 g | 1 mol | 128,17 g |
| Methacrylatsilan 1 | 0,2 mol | 49,7 g | 0,2 mol | 49,7 g |
| Essigsäureethylester | --- | 200 g | | 278 g |
| Dibenzoylperoxid | | 0,77 g | | 1,11 g |

Die organischen (Meth)Acrylatmonomere (Methylmethacrylat, Butylmethacrylat) und Methacrylatalkoxysilan 1 werden in Essigsäureethylester gelöst. Dibenzoylperoxid als Radikalstarter wird zugegeben (1/250 mol bzgl. aller (Meth)Acrylatverbindungen) und das Reaktionsgemisch zum Rückfluss erhitzt (ca. 82 °C). IR- und Ramanspektroskopische Untersuchungen belegen, dass nach 2 Std. Reaktionsdauer die Polymerisationsreaktion abgeschlossen ist (Abnahme der -C=C-Doppelbindung, der (Meth)Acrylatverbindungen).

Ein Auftrag der Polymerlösung auf Glas ergibt nach Abdunsten des Lösemittels einen trockenen, festen Film.

### Beispiel 3 und 4 (nicht erfindungsgemäß):

### Allgemeines Verfahren zur Copolymerisation in Lösung mit nachträglicher Hydrolyse des Methacrylatalkoxysilans und Überführung in das Polysiloxan mit Polyacrylatanteil

Tabelle 2 zeigt die Ausgangssubstanzen und die jeweiligen Mengen.

**Tabelle 2**

| | Beispiel 3 | | Beispiel 4 | |
|---|---|---|---|---|
| Methylmethacrylat | 0,83 mol | 83,1 g | 0,42 mol | 42,05 g |
| Butylacrylat | --- | --- | 0,49 mol | 62,8 g |
| Methacrylatsilan 1 | 0,17 mol | 42,2 g | 0,09 mol | 22,35 g |
| Essigsäureethylester | --- | 125,3 g | --- | 127,2 g |
| Dibenzoylperoxid | --- | 0,5 g | --- | 0,51 g |
| H₂O (dest.) | --- | 9,2 g | --- | 4,87 g |
| Aluminium di-sec-Butoxid-Ethylacetoacetat | --- | 0,42 g | --- | 0,22 g |

a) organische Polymerisation wie unter Beispiel 1 beschrieben
b) Hydrolyse der Alkoxysilangruppe

Nach Abkühlen des Polymerisationsgemisches auf Raumtemperatur (ca. 20 °C) wird der Aluminiumkomplex als Hydrolysekatalysator zugegeben und anschließend das Wasser unter Rühren langsam zugetropft. Nach 4 h Rühren bei Raumtemperatur ist die Hydrolyse abgeschlossen (Bestätigung durch Ramanspektroskopie: Abnahme des Signals der Si(OMe)₃-Gruppe bei ca. 640 cm⁻¹ und Zunahme des Signals von freiem Methanol bei ca. 1030 cm⁻¹).

Ein Auftrag der Polymerlösung auf Glas ergibt nach Abdunsten des Lösemittels einen trockenen, festen Film.

### Beispiel 5 (nicht erfindungsgemäß):

### Allgemeines Verfahren zur Copolymerisation in Lösung mit nachträglicher Hydrolyse des Methacrylatalkoxysilans mit einem organisch funktionellen FluoralkylAlkoxysilan und Überführung in das Polysiloxan mit Polyacrylatanteil

Tabelle 3 zeigt die Ausgangssubstanzen und die jeweiligen Mengen.

**Tabelle 3**

| | Beispiel 5 | |
|---|---|---|
| Methylmethacrylat | 0,65 mol | 65,1 g |
| Methacrylatsilan 1 | 0,13 mol | 32,2 g |
| Essigsäureethylester | --- | 97,4 g |
| Dibenzoylperoxid | --- | 0,39 g |
| Tridecafluor-1,1,2,2-Tetrahydrooctyl-Triethoxysilan 21 | 0,006 mol | 3,06 g |
| H₂O (dest.) | --- | 7,21 g |

a) organische Polymerisation wie unter Beispiel 1 beschrieben
b) Hydrolyse der eingebauten und zugesetzten Alkoxysilane

Nach Abkühlen des Polymerisationsgemisches auf Raumtemperatur (ca. 20 °C) wird das Fluoralkylalkoxysilan und der Aluminiumkomplex zugegeben und anschließend das Wasser unter Rühren langsam zugetropft. Nach 4 h Rühren bei Raumtemperatur ist die Hydrolyse abgeschlossen (Bestätigung durch Ramanspektroskopie: Abnahme des Signals der Si(OMe)₃-Gruppe bei ca. 640 cm⁻¹ und Zunahme des Signals von freiem Methanol bei ca. 1030 cm⁻¹). Die spektroskopische Beobachtung der Hydrolyse der Ethoxysilylgruppe des Fluorsilans ist aufgrund der geringen Konzentration in der Lösung nicht möglich. Ein Auftrag der Polymerlösung auf Glas ergibt nach Abdunsten des Lösemittels einen trockenen, festen Film.

### Beispiel 6 und 7 (nicht erfindungsgemäß):

### Emulsionspolymerisation von Butylacrylat mit Methacrylatalkoxysilan 1

### a) Allgemeines Verfahren zur Vorhydrolyse des Methacrylatalkoxysilans 1

Tabelle 4 zeigt die Ausgangssubstanzen und die jeweiligen Mengen.

**Tabelle 4**

| | | |
|---|---|---|
| Methacrylatsilan 1 | 0,1 mol | 24,84 g |
| H₂O (dest.) | 0,3 mol | 4,4 g |
| Aluminium di-sec-Butoxid-Ethylacetoacetat | --- | 0,25 g |
| | | Summe: 30,5 g |

Das Methacrylatalkoxysilan 1 und Aluminium di-sec-Butoxid-Ethylacetoacetat als Hydrolysekatalysator werden gemischt. Wasser wird bei Raumtemperatur (ca. 20 °C) langsam zugetropft. Die Lösung trübt sich und ist nach ca. 1,5 h Rühren bei Raumtemperatur klar. Nach weiteren 2,5 h Rühren wird der durch Hydrolysereaktion gebildete Methanol im Rotationsverdampfer (Wasserbad: 40 °C) teilweise entfernt.

Aus der erhaltenen Lösung werden 12 g Methanol/Wasser-Gemisch entfernt. Im Hydrolysat von 18,5 g sind 0,1 mol hydrolysiertes Methacrylatsilan 1 in Form eines Siloxans enthalten.

### b) Allgemeines Verfahren zur Emulsionscopolymerisation von organischen (Meth)Acrylatmonomeren mit hydrolysiertem Methacrylatsilan in Wasser

Tabelle 5 zeigt die Ausgangssubstanzen und die jeweiligen Mengen.

**Tabelle 5**

| | Beispiel 6 | | Beispiel 7 | |
|---|---|---|---|---|
| **Emulgatorlösung:** | | | | |
| Natriumdodecylsulfat | | 17,00 g | | 12,60 g |
| H₂O (dest.) | | 74,33 g | | 55,10 g |
| | Summe | 91,33 g | Summe | 67,70 g |
| | | | | |
| **Initiatorlösung:** | | | | |
| Natriumperoxodisulfat | | 0,41 g | | 0,3 g |
| H₂O (dest.) | | 15,80 g | | 11,7 g |
| | Summe | 16,21 g | | 12,00 g |
| | | | | |
| **Butylacrylatemulsion:** | | | | |
| H₂O (dest.) | | 23,68 g | | 14,62 g |
| Natriumdodecylsulfat | | 3,24 g | | 2,00 g |
| Butylacrylat | | 48,60 g | | 30,00 g |
| | Summe | 75,52 g | | 46,62 g |
| | | | | |
| **Methylmethacrylatemulsion:** | | | | |
| H₂O (dest.) | | 15,80 g | | 14,62 g |
| Natriumdodecylsulfat | | 2,16 g | | 2,00 g |
| Methylmethacrylat | | 12,00 g | | 30,00 g |
| | Summe | 29,96 g | | 46,62 g |
| | | | | |
| **Hydrolysiertes Methacry-** | | | | |
| **latsilan 1 aus a)** | | 14,10 g | | 9,76 g |
| | | | | |

### Verfahren:

- Die Emulgatorlösung wird vorgelegt und nacheinander werden ca. 15 % der Butylacrylatemulsion und ca. 10 % der Initiatorlösung zugegeben
- Das Gemisch wird unter Rückfluss gerührt.
- Unter Rückfluss werden die folgenden Komponenten nacheinander langsam zugegeben
   - Die restlichen 85 % der Butylacrylatemulsion
   - Ca. 50 % der restlichen Initiatorlösung
   - Die vollständige Methylmethacrylatemulsion
   - Die gesamte restliche Initiatorlösung
   - Die eingeengte Lösung des hydrolysierten Methacrylatsilans 1
- Anschließend wird 1 h unter Rückfluss gerührt
- Es resultiert eine weiße Emulsion.

### Beispiel 8 (nicht erfindungsgemäß):

### Allgemeines Verfahren zur Emulsionscopolymerisation von organischen (Meth)Acrylatmonomeren mit einem Gemisch aus hydrolysiertem Methacrylatsilan 1 und funktionellem Organoalkoxysilan 23 in Wasser

### a) Allgemeines Verfahren zur Vorhydrolyse des Methacrylatalkoxysilans 1 und des Dimethyldimethoxysilans 23

Tabelle 6 zeigt die Ausgangssubstanzen und die jeweiligen Mengen.

**Tabelle 6**

| | | |
|---|---|---|
| Methacrylatsilan 1 | 0,1 mol | 24,84 g |
| Dimethyldimethoxysilan 23 | 1 mol | 120,22 g |
| H₂O (dest.) | 0,3 mol | 41,45 g |
| Aluminium di-sec-Butoxid-Ethylacetoacetat | --- | 1,45 g |
| | | Summe: 187,96 g |

Das Methacrylatalkoxysilan 1, Dimethyldimethoxysilan 23 und Aluminium di-sec-Butoxid-Ethylacetoacetat als Hydrolysekatalysator werden gemischt. Wasser wird bei Raumtemperatur (ca. 20 °C) langsam zugetropft. Die Lösung trübt sich und ist nach ca. 16 h Rühren bei Raumtemperatur klar. Anschließend wird der durch Hydrolysereaktion gebildete Methanol im Rotationsverdampfer (Wasserbad: 40 °C) teilweise entfernt. Aus der erhaltenen Lösung werden 101,7 g Methanol/Wasser-Gemisch entfernt. Im Hydrolysat von 86,2 g sind 0,1 mol hydrolysiertes Methacrylatsilan 1 und 1 mol hydrolysiertes Dimethyldimethoxysilan 23 in Form eines Siloxans enthalten.

### b) Allgemeines Verfahren zur Emulsionscopolymerisation von organischen (Meth)Acrylatmonomeren mit hydrolysiertem Methacrylatsilan/Dimethylsilan in Wasser

Tabelle 7 zeigt die Ausgangssubstanzen und die jeweiligen Mengen.

**Tabelle 7**

| | Beispiel 8 | |
|---|---|---|
| **Gemischte Emulsion** | | |
| Natriumdodecylsulfat | | 4,00 g |
| H₂O (dest.) | | 29,23 g |
| Methylmethacrylat | | 60,00 |
| Hydrolysiertes Silangemisch aus a) | | 6,11 g |
| | Summe | 99,34 g |
| | | |

| **Initiatorlösung:** | | |
|---|---|---|
| Natriumperoxodisulfat | | 0,3 g |
| H₂O (dest.) | | 11,70 g |
| | Summe | 12,00 g |

### Verfahren:

- 16,57 g Wasser, 4,97 g der gemischten Emulsion und 1,2 g der Initiatorlösung werden gemischt und unter Rückfluss gerührt
- Die restliche gemischte Emulsion und die restliche Initiatorlösung werden gleichzeitig innerhalb von 90 min parallel unter Rückfluss zugetropft. Nach dem Zulauf wird noch 1 h unter Rückfluss gerührt.
- Es resultiert eine weiße Emulsion

Die über Emulsionspolymerisation erhaltenen Lacke/Beschichtungssysteme trocknen an Luft innerhalb weniger Stunden zu einem festen Film.

## Patentansprüche

1. Verfahren zur Herstellung von Hybridpolymeren aus mindestens einem (Meth)acrylat-Monomer und mindestens einem (Meth)acrylat-Alkoxysilan-Monomer durch Kombination einer radikalischen Copolymerisation der Acrylatfunktionalitäten und eine hydrolytische Kondensation der Silanfunktionalitäten,
**dadurch gekennzeichnet, dass** mindestens ein Acrylat-Alkoxysilan-Monomer ausgewählt ist aus der Gruppe bestehend aus folgenden chemischen Strukturen 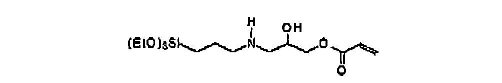 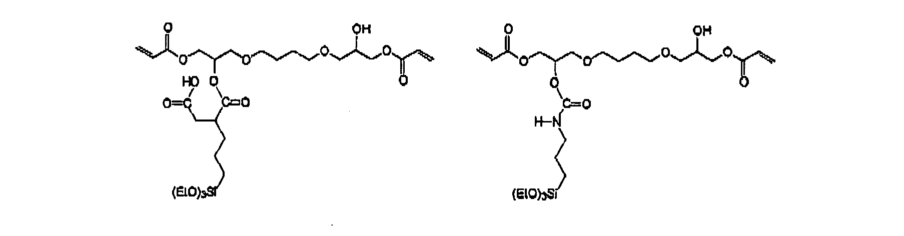 oder Mischungen hiervon.

2. Verfahren nach Anspruch 1,
**dadurch gekennzeichnet, dass** mindestens ein (Meth)acrylat-Alkoxysilanmonomer ausgewählt aus 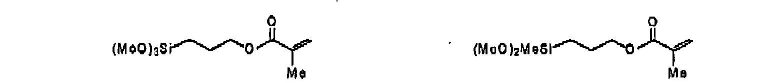 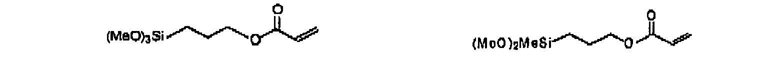 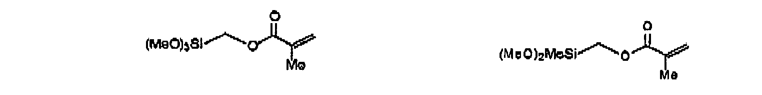 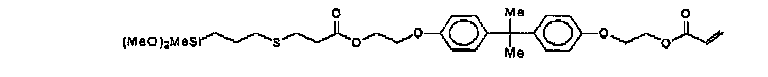 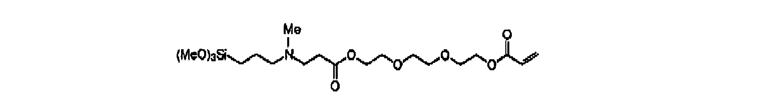 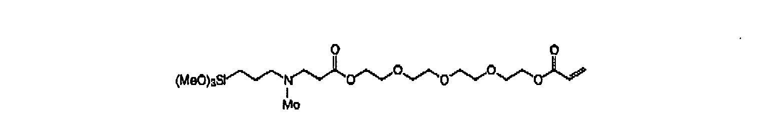 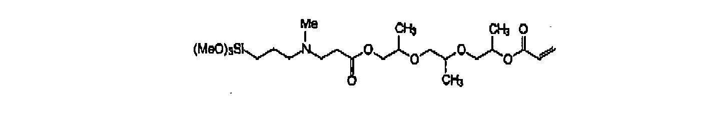 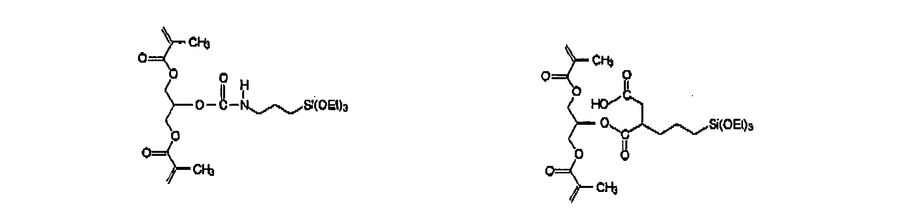 enthalten ist.

3. Verfahren nach Anspruch 1 oder 2,
**dadurch gekennzeichnet, dass** das mindestens eine (Meth)acrylat-Monomer ausgewählt ist aus der Gruppe bestehend aus n-Alkyl(meth)acrylaten, Hydroxy-n-alkyl(meth)acrylaten, 2-Ethylhexyl-(meth)acrylat, Isodecyl(meth)acrylat, Cyclohexyl(meth)acrylat, Isobornyl(meth)acrylat, Benzyl(meth)acrylat, 2-Dimethylaminoethyl-(meth)acrylat, 3-Dimethylaminopropylmethacryl-amid, 2-Trimethylammoniumethylmethacrylatchlorid, 3-Trimethylammoniumethylmethacrylatchlorid, 2-tert-Butylaminoethyl(meth)acrylat, Methoxypolyethylenglykolmethacrylat und Mischungen hiervon.

4. Verfahren nach einem der vorhergehenden Ansprüche,
**dadurch gekennzeichnet, dass** bei der hydrolytischen Kondensation funktionelle oder reaktive Alkoxysilane der allgemeinen Formel R'ₘSi(OR)₄₋ₘ mit R = unabhängig voneinander C₁-C₁₀-Alkyl, Acyl, Alkylcarbonyl oder Alkoxycarbonyl und R'= unabhängig voneinander Alkyl, Aryl, Arylalkyl oder Alkylaryl darstellen, wobei diese Reste durch O- oder S-Atome oder die GruppeNR" unterbrochen sein können und einen oder mehrere Substituenten aus der Gruppe der Halogene und der gegebenenfalls substiuierten Amid-, Aldehyd-, Keto-, Alkylcarbonyl-, carboxy-, Cyano-, Alkaxy-, Alkoxycarbonyl-Gruppen tragen können und m den Wert 1, 2 oder 3 hat, oder reaktive Alkoxysilane der allgemeinen Formel Xₘ Si(OR)₄₋ₘ mit R = C₁-C₁₀-Alkyl, Acyl, Alkylcarbonyl oder Alkoxycarbonyl und X = unabhängig voneinander Alkyl, Alkenyl, Alkinyl, Aryl, Arylalkyl, Alkylaryl, Arylalkenyl, Alkenylaryl, Arylalkinyl oder Alkinylaryl darstellen, wobei diese Reste durch O- oder S-Atome oder die Gruppe -NR" unterbrochen sein können und einen oder mehrere Substituenten aus der Gruppe der Halogene und der gegebenenfalls substituierten Amino-, Amid-, Aldehyd-, Keto-, Alkylcarbonyl, Carboxy-, Mercapto-, Cyano-, Hydroxyl, Alkoxy-, Alkoxycarbonyl-, Sulfonsäure-, Phosphorsäure, Acryloxy-, Methyacryloxy-, Epoxy- oder Vinylgruppen tragen können und m den Wert 1, 2 oder 3 hat, zugesetzt werden.

5. Verfahren nach dem vorhergehenden Anspruch,
**dadurch gekennzeichnet, dass** die funktionellen Alkoxysilane ausgewählt sind aus folgenden chemischen Strukturen:

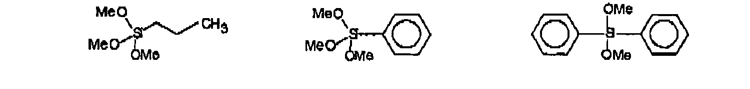

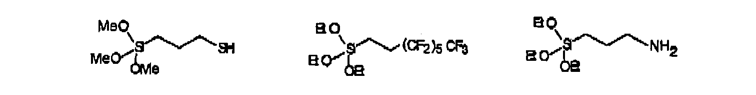

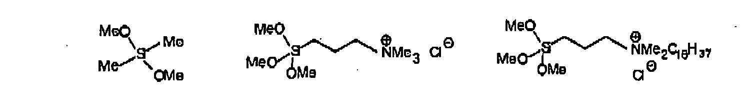

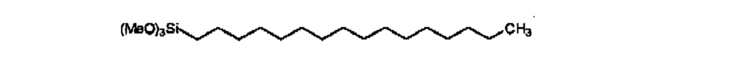

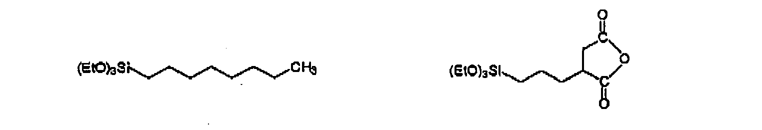

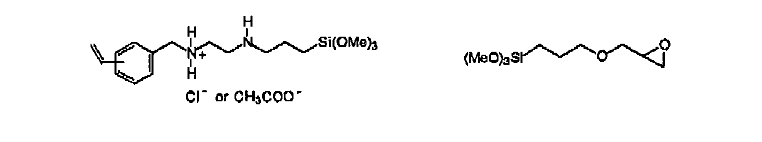

6. Verfahren nach einem der vorhergehenden Ansprüche,
**dadurch gekennzeichnet, dass** bei der hydrolytischen Kondensation Verbindungen der allgemeinen Formel MeR" y, in welcher Me ein Metall, ausgewählt aus der Gruppe Al, Zr, Ti ist, wobei y im Falle von Aluminium 3 und im Falle von Ti und Zr 4 ist und die Reste R", die gleich oder verschieden sein können, Halogen, Alkyl, Alkoxy, Acyloxy oder Hydroxy bedeuten, wobei die soeben genannten Gruppen ganz oder teilweise durch Chelatliganden ersetzt sein können und/oder einem davon abgeleiteten Oligomeren und/oder einem gegebenenfalls komplexierten Aluminiumsalz einer anorganischen oder organischen Säure zugesetzt werden.

7. Verfahren nach einem der vorhergehenden Ansprüche,
**dadurch gekennzeichnet, dass** als Radikalstarter eine Verbindung ausgewählt aus der Gruppe bestehend aus organischen Peroxiden, organischen Hydroperoxiden, Peroxyestern, Peroxycarbonaten und Azoisobutyronitril, eingesetzt wird.

8. Verfahren nach einem der vorhergehenden Ansprüche,
**dadurch gekennzeichnet, dass** das Verfahren folgende Schritte aufweist:
i) Radikalische Copolymerisation von mindestens einem (Meth)acrylat-Monomer mit mindestens einem (Meth)acrylat-Alkoxysilan-Monomer in einem die mindestens zwei Monomere lösenden Lösungsmittel und
ii) Hydrolytische Kondensation des Copolymers unter Erhalt des Hybridpolymers in einem Sol-Gel-Prozess.

9. Verfahren nach Anspruch 8,
**dadurch gekennzeichnet, dass** das Lösungsmittel ausgewählt ist aus der Gruppe bestehend aus Estern, Ketonen, Aldehyden, aliphatischen oder aromatischen Lösungsmitteln sowie Mischungen hiervon.

10. Verfahren nach einem der Ansprüche 8 oder 9,
**dadurch gekennzeichnet, dass** die Copolymerisation bei Temperaturen im Bereich von 50 bis 150 °C durchgeführt wird.

11. Verfahren nach einem der Ansprüche 1 bis 7,
**dadurch gekennzeichnet, dass** das Verfahren folgende Schritte aufweist:
i) Hydrolytische Kondensation mindestens eines (Meth)acrylat-Alkoxysilan-Monomers und
ii) Radikalische Copolymerisation des mindestens einen hydolysierten (Meth)acrylat-Alkoxysilan-Monomers mit mindestens einem (Meth)acrylat-Monomer in einem die mindestens zwei Monomere lösenden Lösungsmittel unter Erhalt des Hybridpolymers.

12. Verfahren nach Anspruch 11,
**dadurch gekennzeichnet, dass** das Lösungsmittel ausgewählt ist aus der Gruppe bestehend aus Estern, Ketonen, Aldehyden, aliphatischen oder aromatischen Lösungsmitteln sowie Mischungen hiervon.

13. Verfahren nach einem der Ansprüche 11 oder 12,
**dadurch gekennzeichnet, dass** die Copolymerisation bei Temperaturen im Bereich von 50 bis 150 °C durchgeführt wird.

14. Hybridpolymer herstellbar nach einem der vorhergehenden Ansprüche.

15. Beschichtung oder Formkörper enthaltend oder bestehend aus einem Hybridpolymer nach Anspruch 14.

## Claims

1. A method of preparing hybrid polymers from at least one (meth)acrylate monomer and at least one (meth)acrylate alkoxysilane monomer by the combination of a radical copolymerization of the acrylate functionalities and a hydrolytic condensation of the silane functionalities, **characterized in that** at least one acrylate alkoxysilane monomer is selected from the group consisting of the following chemical structures 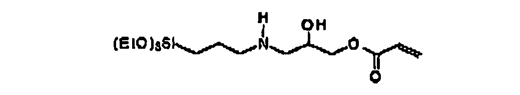 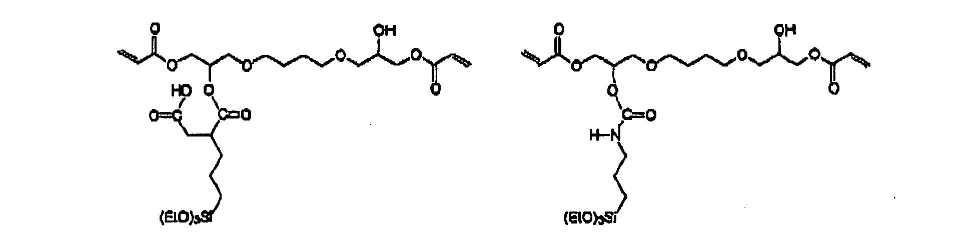 or mixtures thereof.

2. A method according to Claim 1, **characterized in that** at least one (meth)acrylate alkoxysilane monomer selected from 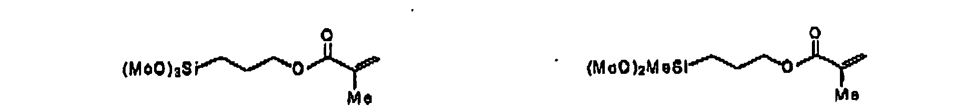 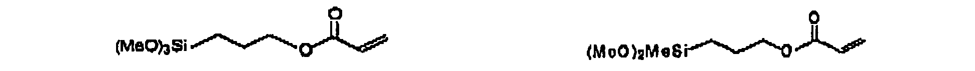 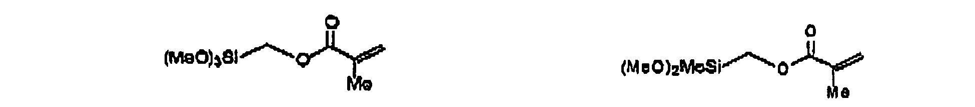 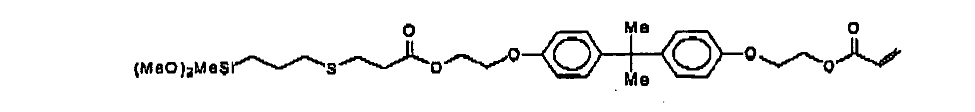 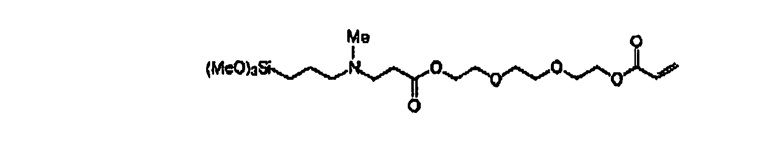 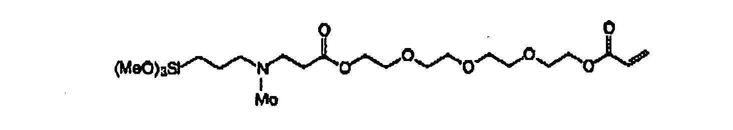 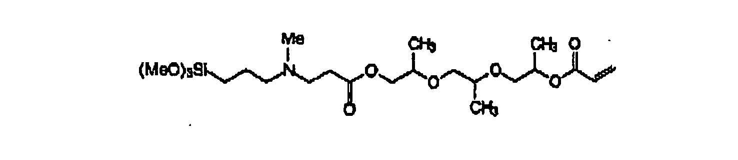 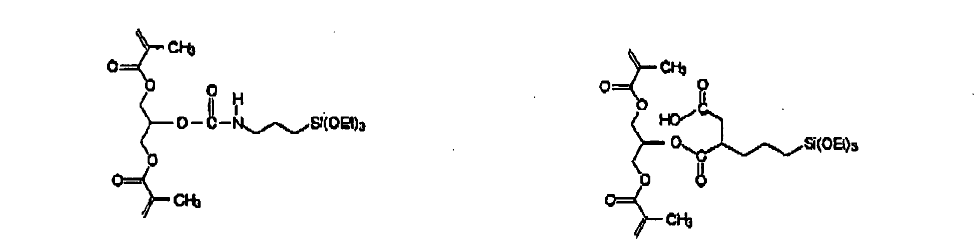 is obtained.

3. A method according to Claim 1 or 2, **characterized in that** the at least one (meth) acrylate monomer is selected from the group consisting of n-alkyl (meth)acrylates, hydroxy-n-alkyl (meth)acrylates, 2-ethylhexyl (meth)acrylate, isodecyl (meth)acrylate, cyclohexyl (meth)acrylate, isobornyl (meth)acrylate, benzyl (meth)acrylate, 2-dimethylaminoethyl (meth)acrylate, 3-dimethylaminopropyl methacryl amide, 2-trimethylammonium ethyl methacrylate chloride, 3-trimethylammonium ethyl methacrylate chloride, 2-tert-butylaminoethyl (meth)acrylate, methoxy polyethylene glycol methacrylate and mixtures thereof.

4. A method according to any one of the preceding Claims, **characterized in that**, in the hydrolytic condensation, functional or reactive alkoxysilanes of the general formula R'ₘSi(OR)₄₋ₘ with **R** representing C₁-C₁₀-alkyl, acyl, alkylcarbonyl or alkoxycarbonyl independently of one another and **R'** representing alkyl, aryl, arylalkyl or alkylaryl independently of one another, wherein the said residues can be interrupted by O or S atoms or the group -NR" and can bear one or more substituents from the group of the halogens and the optionally substituted amide, aldehyde, keto, alkylcarbonyl, carboxy, cyano, alkoxy, alkoxycarbonyl groups and **m** has the value 1, 2 or 3, or reactive alkoxysilanes of the general formula XₘSi(OR)₄₋ₘ with **R** representing C₁-C₁₀-alkyl, acyl, alkylcarbonyl or alkoxycarbonyl and **X** representing alkyl, alkenyl, alkinyl, aryl, arylalkyl, alkylaryl, arylalkenyl, alkenylaryl, arylalkinyl or alkinylaryl independently of one another, wherein the said residues can be interrupted by O or S atoms or the group -NR" and can bear one or more substituents from the group of the halogens and the optionally substituted amino, amide, aldehyde, keto, alkylcarbonyl, carboxy, mercapto, cyano, hydroxy, alkoxy, alkoxycarbonyl, sulphonic-acid, phosphoric-acid, acryloxy, methyacryloxy, epoxy or vinyl groups and **m** has the value 1, 2 or 3, are added.

5. A method according to the preceding Claim, **characterized in that** the functional alkoxysilanes are selected from the following chemical structures:

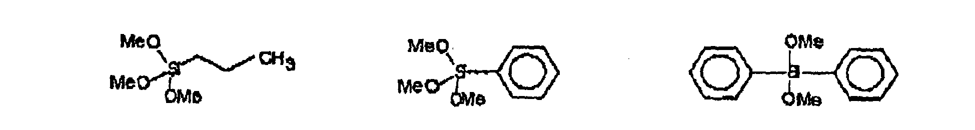

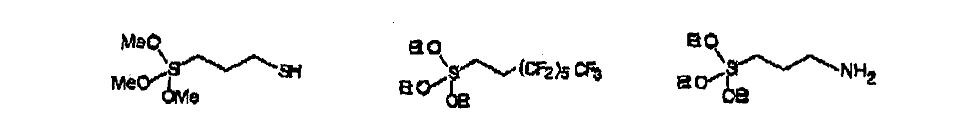

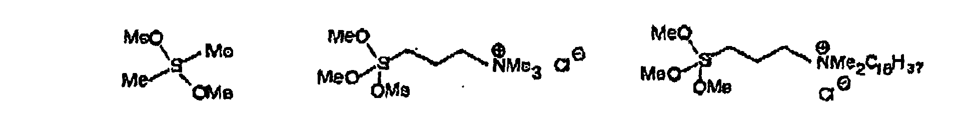

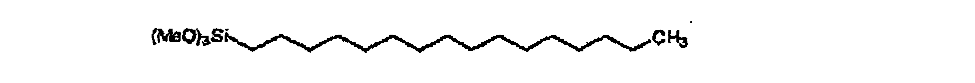

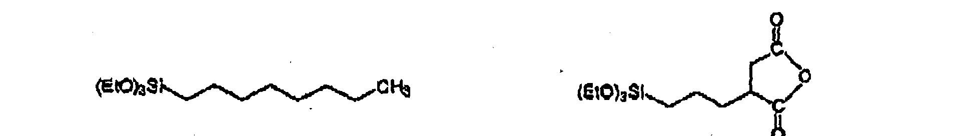

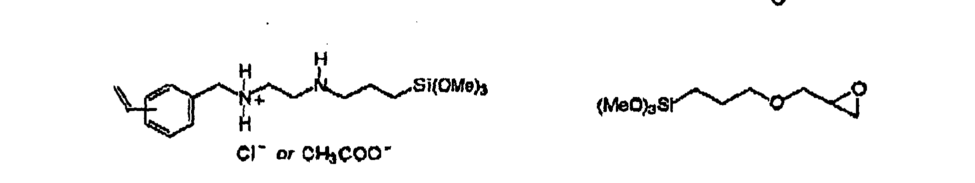

6. A method according to any one of the preceding Claims, **characterized in that**, in the hydrolytic condensation, compounds of the general formula MeR"_{y}, in which **Me** is a metal selected from the group Al, Zr, Ti and in which y is 3 in the case of aluminium and 4 in the case of Ti and Zr and the residues **R"**, which can be the same or different, signify halogen, alkyl, alkoxy, acyloxy or hydroxy, wherein the groups just named can be replaced in their entirety or in part by chelate ligands and/or are added to an oligomer derived therefrom and/or an optionally complexed aluminium salt of an inorganic or organic acid.

7. A method according to any one of the preceding Claims, **characterized in that** a compound selected from the group consisting of organic peroxides, organic hydroperoxides, peroxyesters, peroxycarbonates and azoisobutyronitrile is used as a radical starter.

8. A method according to any one of the preceding Claims, **characterized in that** the method comprises the following steps:
i) radical copolymerization of at least one (meth)acrylate monomer with at least one (meth)acrylate alkoxysilane monomer in a solvent which dissolves the at least two monomers, and
ii) hydrolytic condensation of the copolymer so as to obtain the hybrid polymer in a sol-gel process.

9. A method according to Claim 8, **characterized in that** the solvent is selected from the group consisting of esters, ketones, aldehydes, aliphatic or aromatic solvents and mixtures thereof.

10. A method according to any one of Claims 8 or 9, **characterized in that** the copolymerization is carried out at temperatures in the range of from 50 to 150°C.

11. A method according to any one of Claims 1 to 7, **characterized in that** the method comprises the following steps:
i) hydrolytic condensation of at least one (meth)acrylate alkoxysilane monomer, and
ii) radical copolymerization of the at least one hydrolysed (meth)acrylate alkoxysilane monomer with at least one (meth)acrylate monomer in a solvent which dissolves the at least two monomers so as to obtain the hybrid polymer.

12. A method according to Claim 11, **characterized in that** the solvent is selected from the group consisting of esters, ketones, aldehydes, aliphatic or aromatic solvents and mixtures thereof.

13. A method according to any one of Claims 11 or 12, **characterized in that** the copolymerization is carried out at temperatures in the range of from 50 to 150°C.

14. A hybride polymer capable of being prepared according to any one of the preceding Claims.

15. A coating or moulded body containing or consisting of a hybride polymer according to Claim 14.

## Revendications

1. Procédé de fabrication de polymères hybrides à partir d'au moins un monomère de (méth)acrylate et d'au moins un monomère de (méth)acrylate-alcoxysilane par combinaison d'une copolymérisation radicalaire des fonctionnalités acrylate et d'une condensation hydrolytique des fonctionnalités silane,
**caractérisé en ce que** l'on choisit au moins un monomère d'acrylate-alcoxysilane parmi le groupe constitué des structures chimiques suivantes : 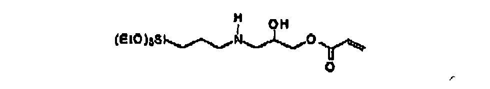 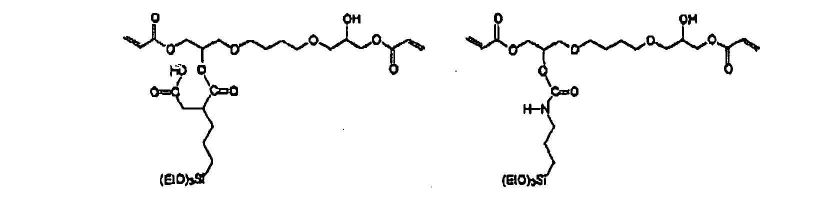 ou de leurs mélanges.

2. Procédé selon la revendication 1,
**caractérisé en ce qu'**il comprend au moins un monomère de (méth)acrylate-alcoxysilane choisi parmi les composants suivants :

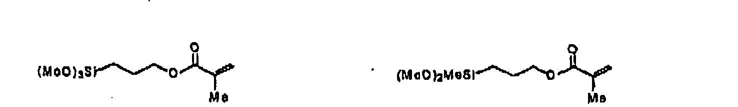

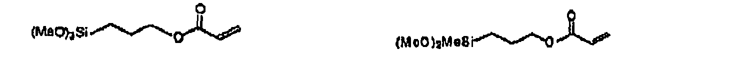

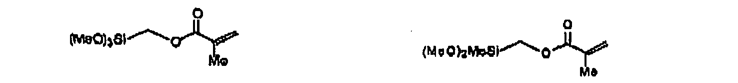

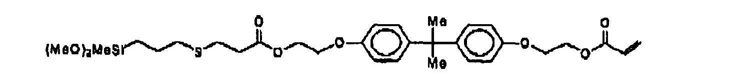

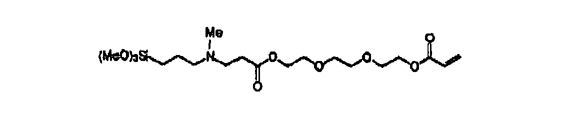

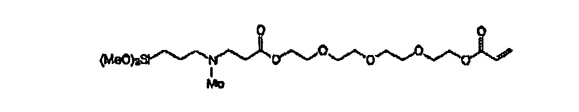

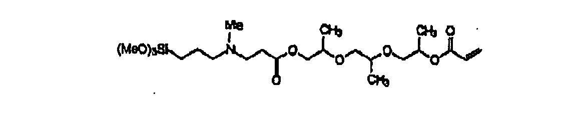

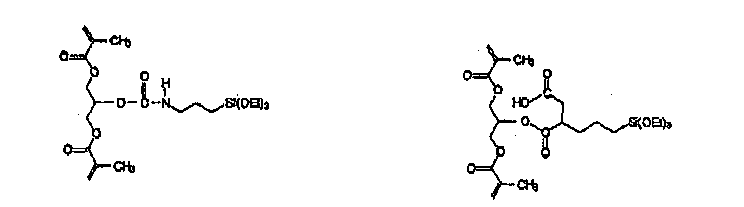

3. Procédé selon la revendication 1 ou 2,
**caractérisé en ce que** l'on choisit au moins un monomère de (méth)acrylate dans le groupe constitué des (méth)acrylates de n-alkyle, des (méth)acrylates d'hydroxy-n-alkyle, du (méth)acrylate de 2-éthylhexyle, du (méth)acrylate d'isodécyle, du (méth)acrylate de cyclohexyle, du (méth)acrylate d'isobornyle, du (méth)acrylate de benzyle, du (méth)acrylate de 2-diméthylaminoéthyle, du 3-diméthylaminopropylméthacrylamide, du chlorure de 2-triméthylammoniuméthylméthacrylate, du chlorure de 3-triméthylammoniuméthylméthacrylate, du (méth)acrylate de 2-tert-butylaminoéthyle, du méthacrylate de méthoxypolyéthylèneglycol et de leurs mélanges.

4. Procédé selon l'une quelconque des revendications précédentes,
**caractérisé en ce que** l'on ajoute, lors de la condensation hydrolytique, des alcoxysilanes fonctionnels ou réactifs de formule générale R'ₘSi (OR)₄₋ₘ, dans laquelle R = de manière indépendante les uns des autres un alkyle en C₁-C₁₀, acyle, alkylcarbonyle ou alcoxycarbonyle, et R' = de manière indépendante les uns des autres un alkyle, aryle, arylalkyle ou alkylaryle, ces radicaux pouvant être interrompus par des atomes d'O ou de S ou par le groupement -NR" et pouvant porter un ou plusieurs substituants choisis dans le groupe des halogènes et des groupements amide, aldéhyde, céto, alkylcarbonyle, carboxyle, cyano, alcoxy, alcoxycarbonyle éventuellement substitués, et dans laquelle m a la valeur 1, 2 ou 3, ou des alcoxysilanes réactifs de formule générale Xₘ Si(OR)₄₋ₘ, dans laquelle R = de manière indépendante les uns des autres un alkyle en C₁-C₁₀, acyle, alkylcarbonyle ou alcoxycarbonyle et X = de manière indépendante les uns des autres un alkyle, alcényle, alcynyle, aryle, arylalkyle, alkylaryle, arylalcényle, alcénylaryle, arylalcynyle ou alcynylaryle, ces radicaux pouvant être interrompus par des atomes d'O ou de S ou par le groupement -NR" et pouvant porter un ou plusieurs substituants choisis parmi les halogènes et les groupements amino, amide, aldéhyde, céto, alkylcarbonyle, carboxyle, mercapto, cyano, hydroxyle, alcoxy, alcoxycarbonyle, acide sulfonique, acide phosphorique, acryloxy, méthylacryloxy, époxy ou vinyle éventuellement substitués et dans laquelle m a la valeur 1, 2 ou 3.

5. Procédé selon la revendication précédente,
**caractérisé en ce que** les alcoxysilanes fonctionnels sont choisis dans le groupe constitué des structures chimiques suivantes :

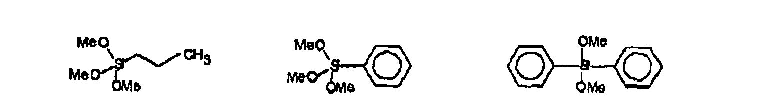

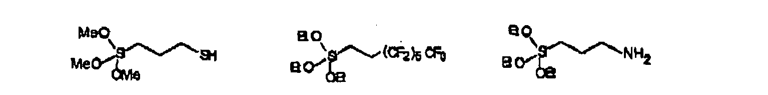

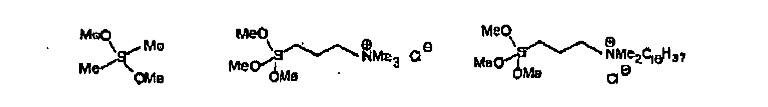

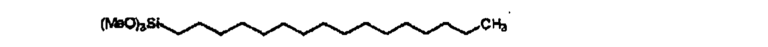

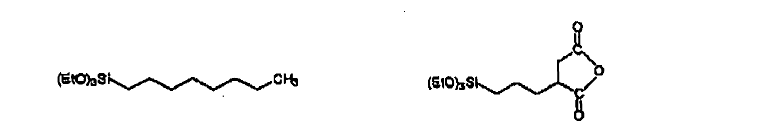

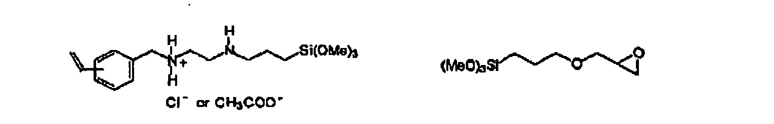

6. Procédé selon l'une quelconque des revendications précédentes,
**caractérisé en ce que** l'on ajoute, lors de la condensation hydrolytique, des composés de formule générale MeR"_{y}, dans laquelle Me est un métal choisi dans le groupe constitué des éléments Al, Zr, Ti, y valant 3 dans le cas de l'aluminium et 4 dans le cas des éléments Ti et Zr, et dans laquelle les radicaux R", qui peuvent être identiques ou différents, représentent un halogène, un groupement alkyle, alcoxy, acyloxy ou hydroxyle, les groupements précités pouvant être remplacés entièrement ou partiellement par des ligands chélatants, et/ou un oligomère qui en dérive et/ou un sel d'aluminium éventuellement complexé d'un acide inorganique ou organique.

7. Procédé selon l'une quelconque des revendications précédentes,
**caractérisé en ce que** l'on utilise comme initiateur de radicaux, un composé choisi dans le groupe constitué des peroxydes organiques, des hydroperoxydes organiques, des peroxyesters, des peroxycarbonates et de l'azo-isobutyronitrile.

8. Procédé selon l'une quelconque des revendications précédentes,
**caractérisé en ce que** le procédé présente les étapes suivantes :
i) copolymérisation radicalaire d'au moins un monomère de (méth)acrylate avec au moins un monomère de (méth)acrylate-alcoxysilane dans un solvant dissolvant les au moins deux monomères, et
ii) condensation hydrolytique du copolymère conduisant à l'obtention du polymère hybride selon un procédé de type sol-gel.

9. Procédé selon la revendication 8,
**caractérisé en ce que** l'on choisit le solvant dans le groupe constitué des esters, des cétones, des aldéhydes, des solvants aliphatiques ou aromatiques, ainsi que de leurs mélanges.

10. Procédé selon l'une quelconque des revendications 8 ou 9, **caractérisé en ce que** la copolymérisation est réalisée à des températures comprises dans la plage de 50 à 150 °C.

11. Procédé selon l'une quelconque des revendications 1 à 7, **caractérisé en ce que** le procédé présente les étapes suivantes :
i) condensation hydrolytique d'au moins un monomère de (méth)acrylate-alcoxysilane, et
ii) copolymérisation radicalaire de l'au moins un monomère de (méth)acrylate-alcoxysilane hydrolysé avec au moins un monomère de (méth)acrylate dans un solvant dissolvant les au moins deux monomères conduisant à l'obtention du polymère hybride.

12. Procédé selon la revendication 11,
**caractérisé en ce que** l'on choisit le solvant dans le groupe constitué des esters, des cétones, des aldéhydes, des solvants aliphatiques ou aromatiques, ainsi que de leurs mélanges.

13. Procédé selon l'une quelconque des revendications 11 ou 12,
**caractérisé en ce que** la copolymérisation est réalisée à des températures comprises dans la plage de 50 à 150°C.

14. Polymère hybride pouvant être fabriqué selon l'une quelconque des revendications précédentes.

15. Revêtement ou corps moulé contenant ou constitué d'un polymère hybride selon la revendication 14.
